# EUROPEAN PATENT SPECIFICATION

(11) **EP 1 560 752 B1**
(45) Date of publication and mention of the grant of the patent: **26.07.2006**
(21) Application number: 03751178.9
(22) Date of filing: 21.10.2003
(51) Int. Cl.: B65B 9/22

(54) **EQUIPMENT TO PACKAGE RECTANGULAR BAGS WITH RIGID CORNERS**
AUSRÜSTUNG ZUR VERPACKUNG RECHTECKIGER BEHÄLTER MIT STEIFEN ECKEN
SYSTEME POUR FORMER DES EMBALLAGES RECTANGULAIRES A COINS RIGIDES

(30) Priority: 04.11.2002 IT BO20020694
(43) Date of publication of application: 10.08.2005
(60) Divisional application: 06003375.0
(73) Proprietor: ICA SPA, 40138 Bologna (IT)
(72) Inventor: RAPPARINI, Gino, I-40138 Bologna (IT)
(74) Representative: Beszédes, Stephan G.
(86) International application number: PCT/IB2003/004672
(87) International publication number: WO 2004/041646

(56) References cited:
- EP-A- 0 982 229
- EP-A- 1 167 192
- DE-A- 19 957 891
- US-A1- 2002 017 077
- "DIE FOLIENSCHACHTEL TFH BERLIN - MITTLER ZWISCHEN WISSENSCHAFT UND PRAXIS" VERPACKUNGS RUNDSCHAU, VERLAG P.KEPPLER K.G. HEUSENSTAMM, DE, August 1996 (1996-08), pages 8-9, XP002950061 ISSN: 0341-7131

## Description

### Field of the art

The present invention refers to the technology of packaging machines and to the packages resulting from said machines. As reference classes there are the following International Classifications: B65b, B65d.

### State of the art

Some kind of equipment to package rectangular bags with rigid corners are already known: all the known equipment have cumbersome and expensive complexities especially when the change of format is required. In fact, when the need to change the proportioning and the dimensioning of the bag to be packaged arises, complex structural problems come along, which require difficult and expensive interventions. Said interventions also might turn out unreliable especially to regulate the operating devices which are cinematically very articulated.

Document EP-A-1 167 192 together with Document US 2002/017077 A1 (according to EP-A-1 167 192, column 5, lines 26 to 40, the teaching of US 2002/017077 A1 is to be regarded as incorporated into EP-A-1 167 192) discloses an equipment to package rectangular bags with rigid corners comprising a forming rectangular tube, said tube together with two longitudinal side contrasts located parallel to two parallel sides of the forming tube, create on the film (2) four prominent longitudinal folds, which remain during the intervention of four thermosealing devices (see column 5, lines 2 to 19 and paragraph 0023). Said thermosealing devices, in cooperation with the side contrasts, perform the thermosealing operations of the prominent longitudinal folds of the film, which is wrapped around the rectangular tube, thus realizing the stiffening at the four corners of the bag resulting from the packaging process of the film, wherein the equipment is set-up with a quadruplet thermosealing equipment whose operational movements are obtained by a single oscillation movement of one single shaft (see US 2002/017077 A1, ref.no. 36), wherein two couples of rectilinear racks transform the angular oscillations of the shaft in opposed simultaneous rectilinear translations of said quadruplet of thermosealing devices (see US 2002/017077 A1, paragraph 0032).

The solution proposed by the present invention solves all the problems above in a surprisingly easy, reliable and affordable way.

### Description

The subject-matter of the invention is an equipment to package rectangular bags with rigid corners, comprising a rectangular forming tube provided with four small fins that are parallel and prominent laterally along the prolongation of two parallel sides of the forming tube, said fins, together with two longitudinal side contrasts, being located parallel to two other sides of the forming tube for creating on a film four prominent longitudinal folds, which remain even when the four short fins end, in order to allow the intervention of four thermosealing devices, said thermosealing devices, in cooperation with the side contrasts, being constructed for performing thermosealing operations of the prominent longitudinal folds of the film, which is wrapped around the rectangular forming tube, thus realizing the stiffening of the four corners of the bag resulting from the packaging process of the film, wherein the equipment is set up with a quadruplet of thermosealing devices whose operational movements are obtained by a single oscillating movement of one single shaft having two long toothed zones each engaging with a couple of rectilinear racks, the couples of rectilinear racks transforming the angular oscillations of the shaft in opposed simultaneous rectilinear translations of said quadruplet of thermosealing devices.

The subject-matter of the invention is distinguished from Documents EP-A-1 167 192 and US 2002/017077 A1 by the following two groups of features:
- group A, fins of the forming tube:
   - the forming tube is provided with four small fins that are parallel and prominent laterally along the prolongation of the two parallel sides of the forming tube, said fins end to allow the intervention of four thermosealing devices and
- group B, gear means:
   - the single shaft has two long toothed zones each engaging with a couple of rectilinear racks.
Though the features of group A are known from Document DE 199 57 891 A (see fig. 3, ref. no. 14, column 2, lines 57 to 58 and column 3, lines 50 to 56), the features of group B are not known from, nor suggested by the prior art documents EP-A-1 167 192, US 2002/017077 A1, DE 199 57 891 A and EP-A-0 982 229.

Advantageously the quadruplet of thermosealing devices comprises longitudinal thermosealing devices.

Suitably four springs are inserted on the four racks in order to allow to all four thermosealing devices to get in touch with the side contrasts for evening out slight but inevitable geometric differences.

According to a preferred embodiment the equipment is constructed for allowing an automatic regulability, also of an elastic give of the four springs, and for obtaining an ability to automatically calibrate a sealing pressure of the four thermosealing devices with the regulation of the length of the angular oscillations of the single shaft.

The invention is now disclosed with reference to the figures of the drawings attached as a not limiting example.

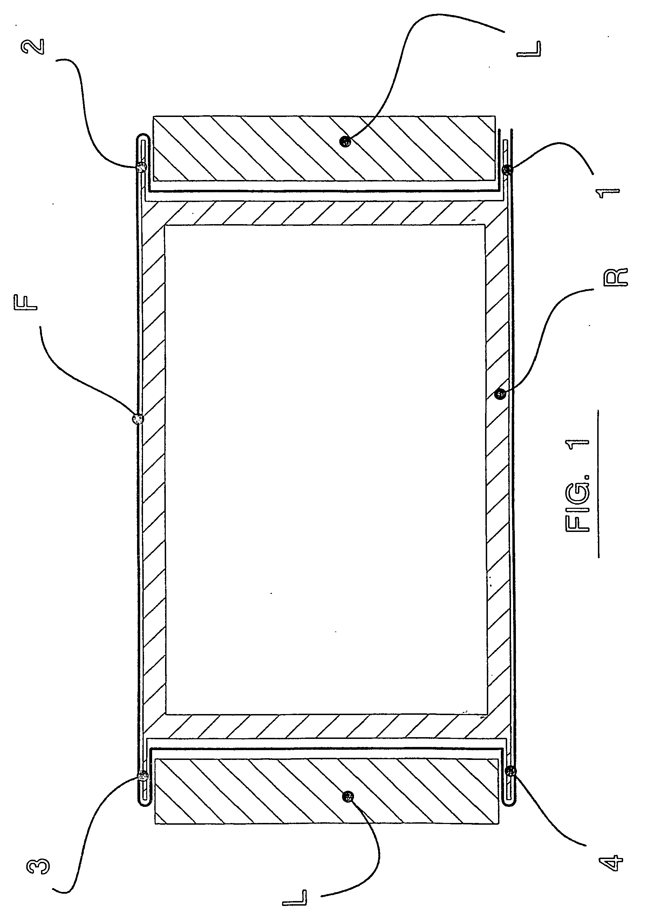

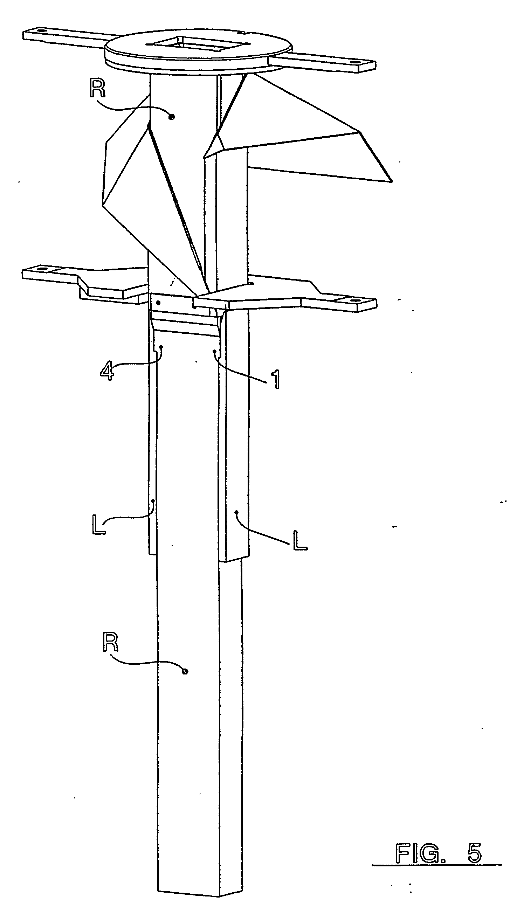

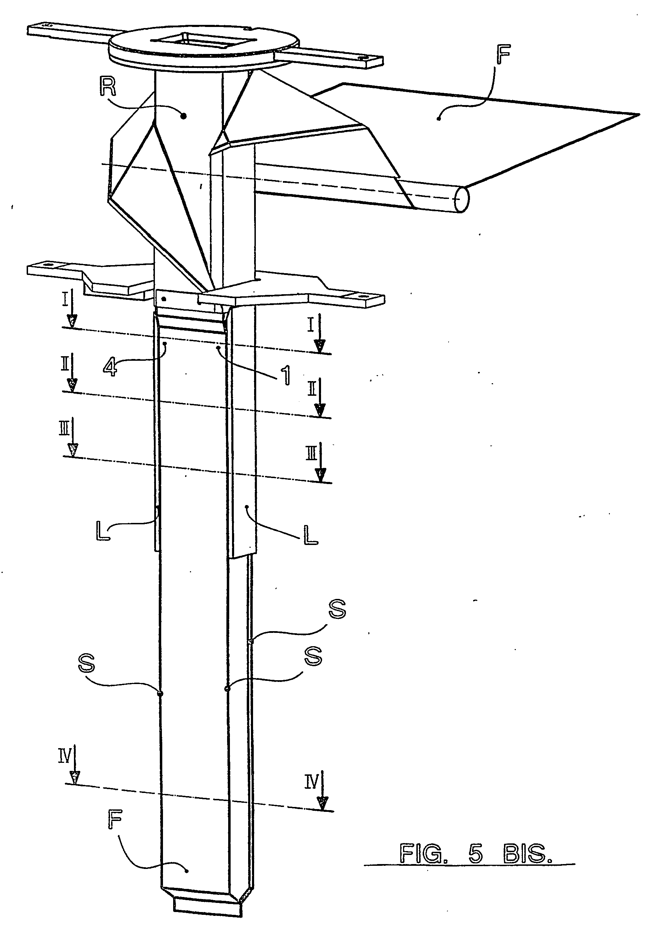

Figure 1 shows, in a section view referred to the position I - I of the figure 5 bis, the position that the film (F) takes by the four short fins (1, 2, 3, 4) of the rectangular forming tube (R), in cooperation with the side contrasts (L). It can be noticed the presence of the four fins inside the folds of film (F).

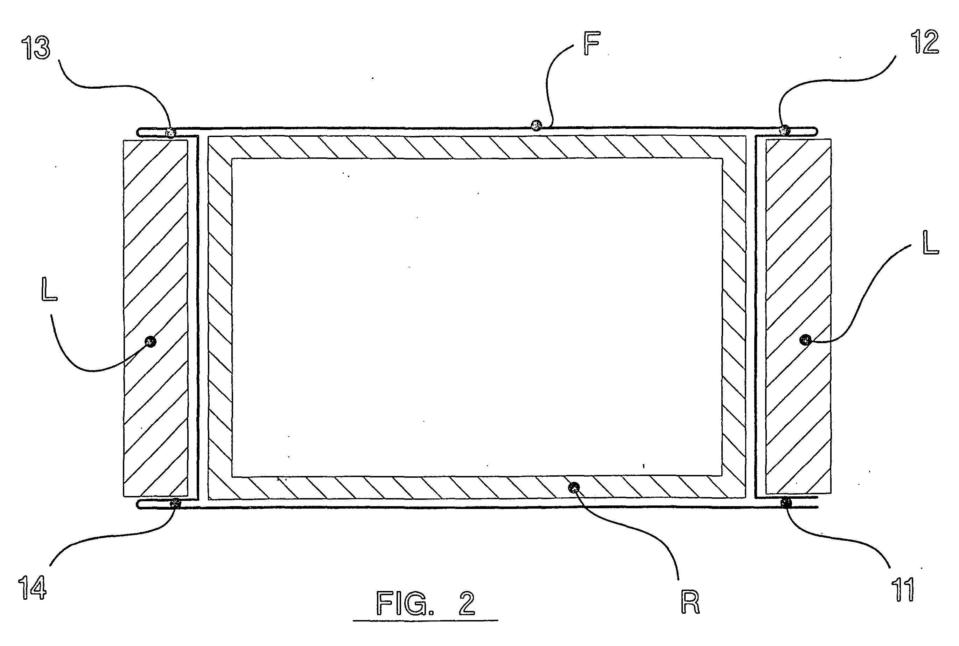

Figure 2 shows, in a section view referred to the position II-II of figure 5 bis, the position that the four folds (11, 12, 13, 14) keep even when the short fins (1, 2, 3, 4) end. It should be pointed out that the folds (11, 12, 13, 14) of the film (F) remain in their folded stance even when the fins that had previously formed them, together with the side contrasts (L), are absent.

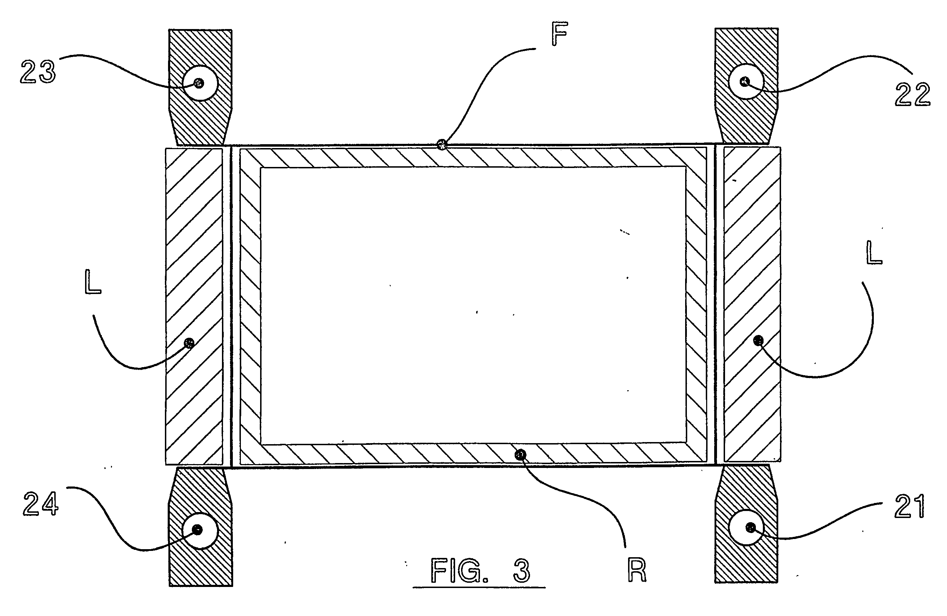

Figure 3 shows, in a section view referred to the position III-III still of figure (5 bis), the intervention of four thermosealing devices (21, 22, 23, 24) which thermoseal the folds (11, 12, 13, 14) of the film (F) against the side contrasts (L). It is clear that the fins (1, 2, 3, 4) are not inserted anymore in the folds (11, 12, 13, 14).

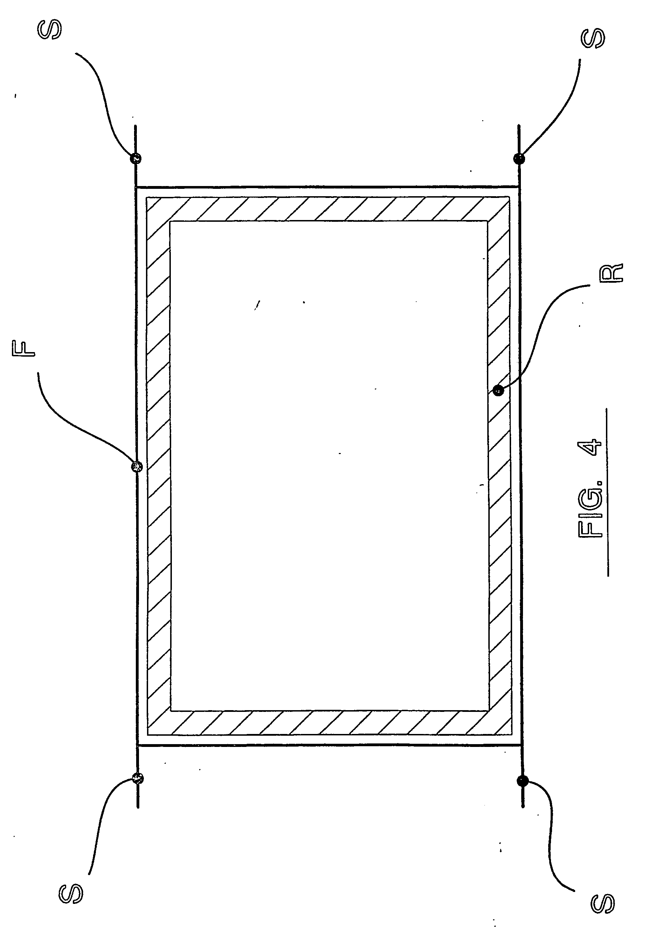

Figure 4 shows, in a section referred to the position IV-IV of the same 5bis figure, the rigid stance that the corners (S) of the film (F) take by the four corners of the rectangular forming tube (R).
Figure 5 is a prospective representation of the rectangular forming tube (R) provided with side contrasts (L). It can be noticed the presence of two fins (1, 4) prominent laterally from the forming tube (R).
Figure 5 bis is a prospective representation of the evolution of film (F) which is transformed by tube (R), by fins (1, 2, 3, 4) and by the side contrasts (L) in a rectangular package with rigid corners (S).

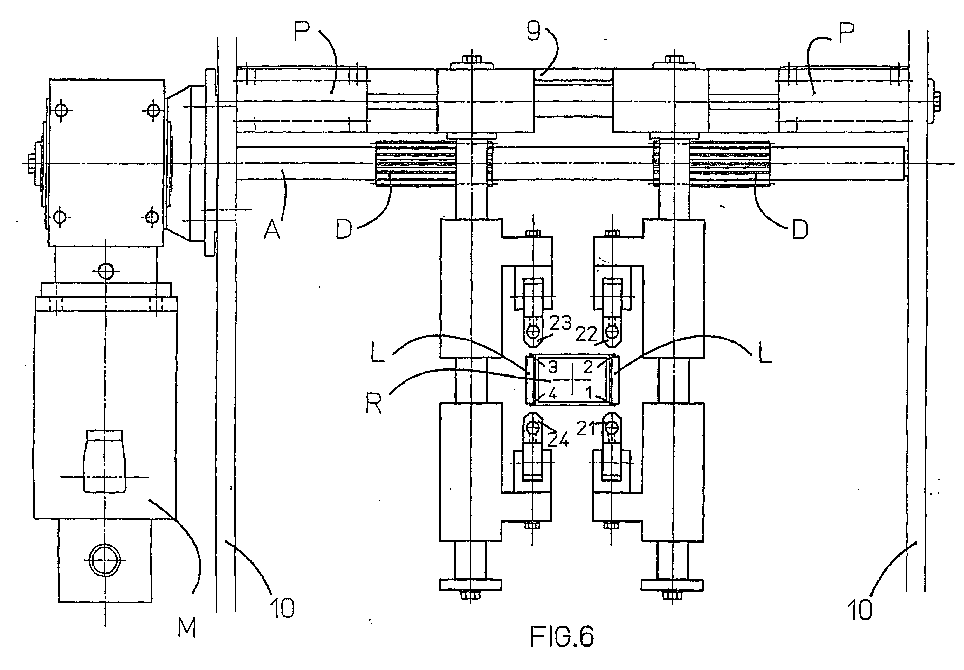

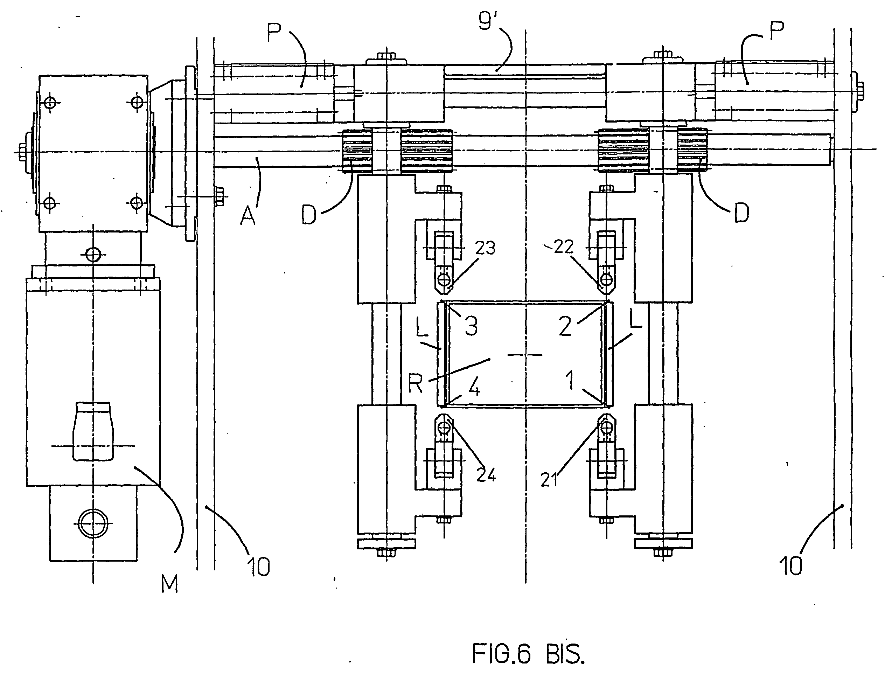

Figure 6 is a schematic horizontal view of the quadruplet equipment set up for a rectangular format of limited dimensions: it should be made clear that the pneumatic actuator (P) performs the positioning of the quadruplet equipment against its stop (9), which defines the side dimensions of the reduced format. It can be noticed the positioning of the four thermosealing devices (21, 22, 23, 24) by the four fins (1, 2, 3, 4) and the side contrasts (L) along the flanks of the rectangular forming tube (R). In said figure (6) it can be noticed the presence of the shaft (A) with two toothed zones (D).
Figure 6 bis is an horizontal schematic view of the same quadruplet equipment set up in a similar fashion for a rectangular format of larger dimensions defined by the stop (9'). It can be noticed that the same quadruplet equipment (21, 22, 23, 24) finds its working position with reference to the new enlarged contrasts.
Figure 7 is a vertical view which shows the positioning against the stop (9) of the frame (8) sliding along the guides (7) fixed upon the bearing structure (10). Four racks (31, 32, 33, 34) can be noticed engaging with the four toothed zones (D) of the shaft (A).

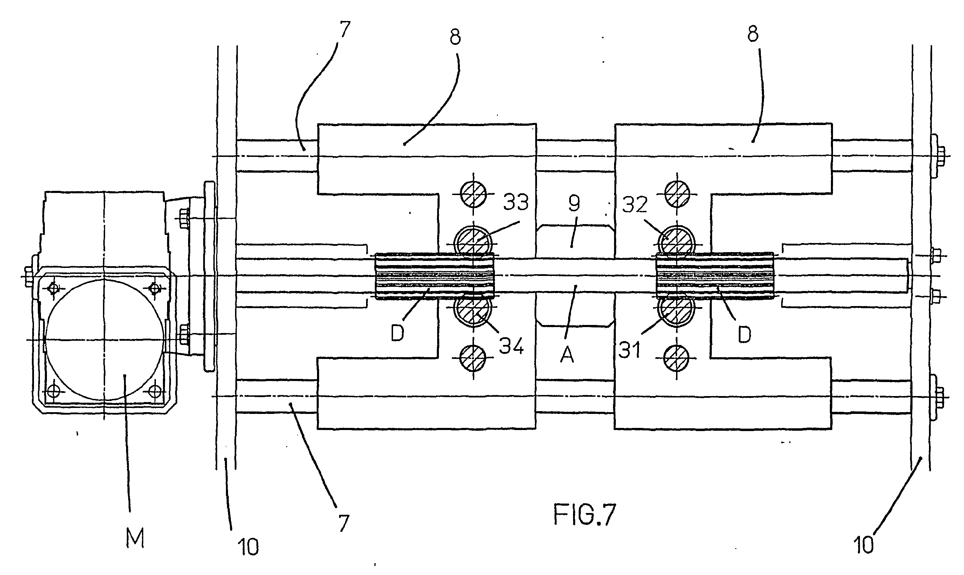

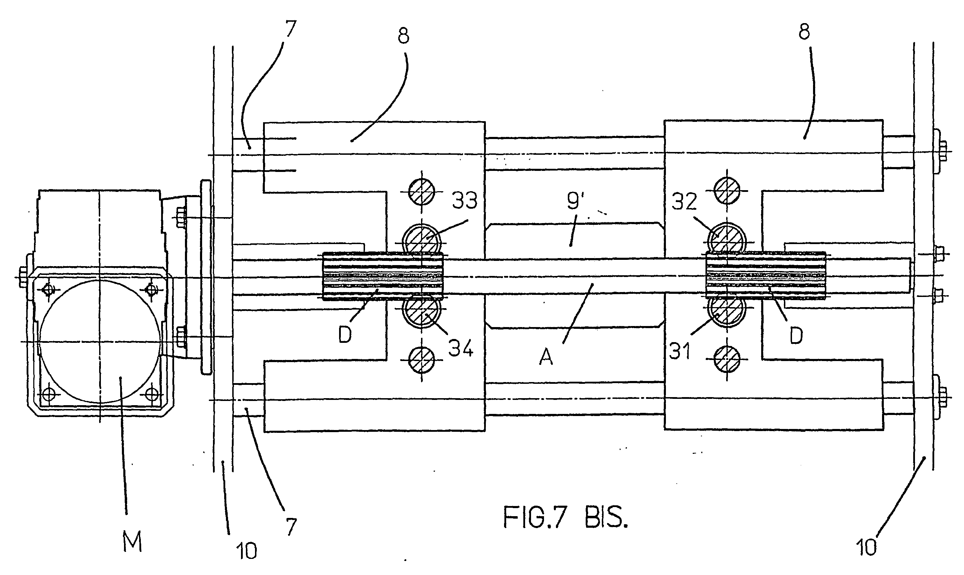

Figure 7bis is a similar view of the figure (7) and shows the positioning of the same sliding frames (8) against the stop (9') of the enlarged format.

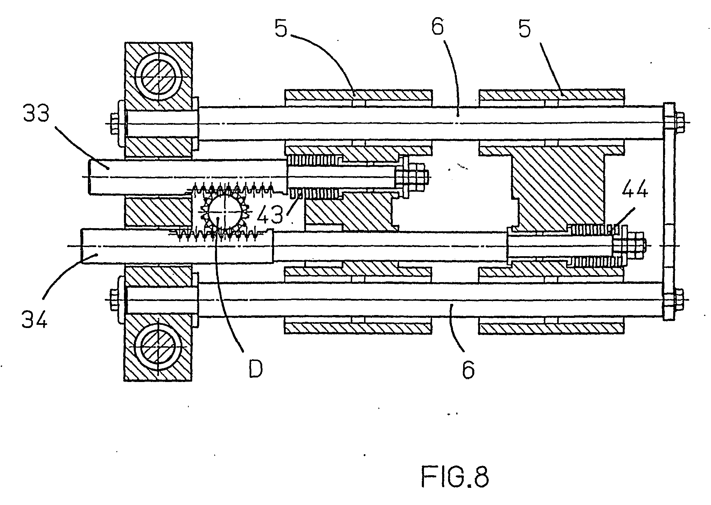

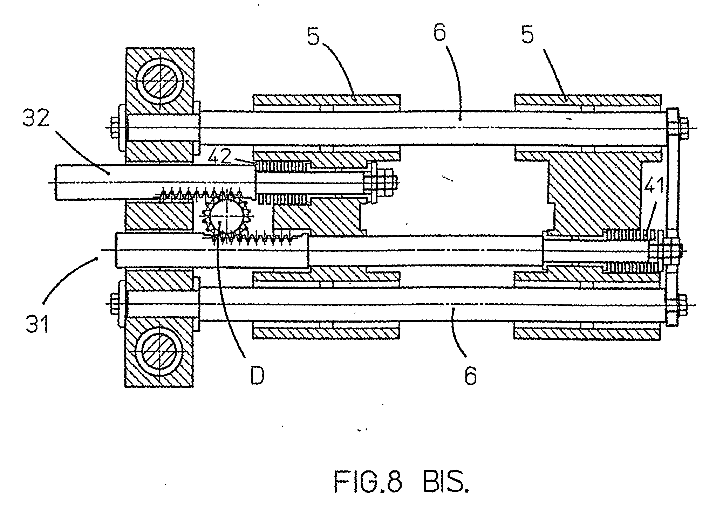

Figure 8 and figure 8bis highlight the function of the four springs (41, 42, 43, 44) inserted on the four racks that make slide simultaneously the frames (5) on the fixed guides (6) of the bearing structure (10). It can be noticed that the presence of the springs is crucial to calibrate the push of the thermosealing devices (21, 22, 23, 24) against the side contrasts (L).

In the figures each single detail is marked as follows:
A is the single transmission shaft.
D indicates two long toothed zones on the side of the shaft (A).
F is the thermosealable film.
L indicates the side contrasts located on the sides of the rectangular forming tube (R).
M indicates the sensitive motor that performs angular oscillations of said single shaft (A).
P indicates a pneumatic actuator which performs the sideways movements of coming and departure of said sliding frames (8) along the fixed guides (7). The working position is defined by the stops (9, 9') corresponding to the format to be packaged.
R indicates the rectangular forming tube.
S indicates the four corners of the packaged bag.
1, 2, 3, 4 indicate four short parallel fins prominent sideways along the prolongation of two parallel sides of the rectangular forming tube.
11, 12, 13, 14 indicate four longitudinal folds prominent from the film (F), which form around the fins 1, 2, 3 and 4 corresponding to the four side contrasts (L).
It should be pointed out that the four fold (11, 12, 13, 14) remain even when the four fins (1, 2, 3, 4) end.
21, 22, 23 and 24 indicate four longitudinal thermosealing devices which, in cooperation with the edges of two side contrasts L, perform the thermosealing operation of said four prominent folds at four corners of the forming rectangular tube (R).
31, 32, 33, 34 indicate four racks engaging with two long toothed zones (D) of the shaft (A). It is clear that the angular oscillations are transformed in opposed and simultaneous alternate rectilinear translations of the four thermosealing devices (21, 22, 23, 24) provided at the edges of said racks (31, 32, 33, 34).
41, 42, 43, 44 indicate the springs inserted on the racks (31, 32, 33, 34) to allow all four thermosealing devices (21, 22, 23, 24) to enter in touch with the respective side contrasts (L) to grant the calibration of the thermosealing action.
5 indicates the frames sliding along the relative fixed guiding rods 6 attached to the supporting structure (10).
6 indicates the guiding rods of the sliding frames (5).
7 indicates the guiding rods of the sliding frames (8).
8 indicates the frames sliding on the guides (7) fixed on the supporting structure (10).
9 and 9' indicate the stops to determinate the position of the formats.
10 indicate the supporting structure of the entire equipment.

The evidence of the figures highlights the simplicity and reliability of the equipment object of the present invention.

The practical realization of the present invention could of course be performed according to with different dimensioning, structural proportioning and technological choices, as long as the fundamental operational principle of realizing a quadruplet thermosealing equipment that intervenes simultaneously upon to the four corner to make stiff.

All kinds of equipment to package rectangular bags with rigid corners which will present the same characteristics as the one fundamentally described, shown and hereinafter claimed will be considered as being part of the protection sphere of the present invention.

## Claims

1. An equipment to package rectangular bags with rigid corners, comprising a rectangular forming tube (R) provided with four small fins (1,2,3,4) that are parallel and prominent laterally along the prolongation of two parallel sides of the forming tube (R), said fins, together with two longitudinal side contrasts (L), being located parallel to two other sides of the forming tube (R) for creating on a film (F) four prominent longitudinal folds (11, 12, 13, 14), which remain even when the four short fins (1, 2, 3, 4) end, in order to allow the intervention of four thermosealing devices (21, 22, 23, 24), said thermosealing devices (21, 22, 23, 24), in cooperation with the side contrasts (L), being constructed for performing thermosealing operations of the prominent longitudinal folds of the film (F), which is wrapped around the rectangular forming tube (R), thus realizing the stiffening of the four corners (S) of the bag resulting from the packaging process of the film (F), wherein the equipment is set up with a quadruplet of thermosealing devices (21, 22, 23, 24) whose operational movements are obtained by a single oscillating movement of one single shaft (A) having two long toothed zones (D) each engaging with a couple of rectilinear racks (31, 32, 33, 34), the couples of rectilinear racks transforming the angular oscillations of the shaft (A) in opposed simultaneous rectilinear translations of said quadruplet of thermosealing devices (21, 22, 23, 24).

2. The equipment of claim 1, wherein said quadruplet of thermosealing devices (21, 22, 23, 24) comprises longitudinal thermosealing devices (21, 22, 23, 24).

3. The equipment of claim 1, wherein four springs (41, 42, 43, 44) are inserted on the four racks (31, 32, 33, 34) in order to allow to all four thermosealing devices to get in touch with the side contrasts (L) for evening out slight but inevitable geometric differences.

4. The equipment according to claim 3, wherein it is constructed for allowing an automatic regulability, also of an elastic give of the four springs (41, 42 , 43, 44), and for obtaining an ability to automatically calibrate a sealing pressure of the four thermosealing devices (21, 22, 23, 24) with the regulation of the length of the angular oscillations of the single shaft (A).

## Patentansprüche

1. Vorrichtung zum Verpacken rechteckiger Beutel mit steifen Ecken, umfassend
ein rechteckiges Formrohr (R), das mit vier kleinen Rippen (1, 2, 3, 4) versehen ist, die parallel liegen und seitlich entlang der Verlängerung von zwei parallelen Seiten des Formrohres (R) vorstehen, wobei die Rippen zusammen mit zwei länglichen Seitengegenstücken (L) parallel zu zwei weiteren Seiten des Formrohres (R) angeordnet sind, um auf einem Film (F) vier vorstehende, längliche Falten (11, 12, 13, 14) zu erzeugen, die auch dann bleiben, wenn die vier kurzen Rippen (1, 2, 3, 4) enden, um den Eingriff von vier Thermosiegelvorrichtungen (21, 22, 23, 24) zuzulassen, wobei die Thermosiegelvorrichtungen (21, 22, 23, 24) in Zusammenwirken mit den Seitengegenstücken (L) aufgebaut sind, um Thermosiegeloperationen der vorstehenden, länglichen Falten des Films (F) auszuführen, der um das Rechteckformrohr (R) gewickelt wird, und somit die Versteifung der vier Ecken (S) des Beutels zu realisieren, die aus dem Verpackungsprozess des Films (F) resultiert, wobei die Vorrichtung mit einer Vierergruppe von Thermosiegelvorrichtungen (21, 22, 23, 24) aufgebaut ist, deren Betriebsbewegungen durch eine einzelne Schwingbewegung einer Einzelwelle (A) erhalten werden, die zwei Bereiche (D) mit langen Zähnen aufweist, welche jeweils mit einem Paar geradliniger Zahnstangen (31, 32, 33, 34) in Eingriff stehen, wobei die Paare geradliniger Zahnstangen die Winkelschwingungen der Welle (A) in entgegengesetzte, gleichzeitige, geradlinige Translationen der Vierergruppe von Thermosiegelvorrichtungen (21, 22, 23, 24) übertragen.

2. Vorrichtung nach Anspruch 1,
wobei die Vierergruppe von Thermosiegelvorrichtungen (21, 22, 23, 24) längliche Thermosiegelvorrichtungen (21, 22, 23, 24) umfasst.

3. Vorrichtung nach Anspruch 1,
wobei vier Federn (41, 42, 43, 44) an den vier Zahnstangen (31, 32, 33, 34) eingesetzt sind, um zuzulassen, dass alle vier Thermosiegelvorrichtungen in Kontakt mit den Seitengegenstücken (L) gelangen, um geringfügige, aber unvermeidliche geometrische Differenzen auszugleichen.

4. Vorrichtung nach Anspruch 3,
wobei sie derart aufgebaut ist, dass sie eine automatische Regulierbarkeit auch einer Elastizität der vier Federn (41, 42, 43, 44) zulässt, und dass eine Fähigkeit erhalten wird, einen Siegeldruck der vier Thermosiegelvorrichtungen (21, 22, 23, 24) mit der Regulierung der Länge der Winkelschwingungen der Einzelwelle (A) automatisch zu kalibrieren.

## Revendications

1. Système pour emballer des sacs rectangulaires à coins rigides, comprenant un manchon rectangulaire (R) possédant quatre petites ailettes (1, 2, 3, 4) parallèles et faisant saillie latéralement le long du prolongement de deux côtés parallèles du manchon (R), lesdites ailettes, avec deux contrepièces latérales longitudinales (L), étant situées parallèlement à deux autres côtés du manchon (R) pour créer sur un film (F) quatre pliures longitudinales faisant saillie (11, 12, 13, 14) qui restent même lorsque les quatre ailettes courtes (1, 2, 3, 4) se terminent, afin de permettre l'intervention de quatre dispositifs de soudage à chaud (21, 22, 23, 24), lesdits dispositifs de soudage à chaud (21, 22, 23, 24), en coopération avec les contrepièces latérales (L), étant construits pour effectuer des opérations de soudage à chaud des pliures longitudinales faisant saillie du film (F) qui est enroulé autour du manchon rectangulaire (R), réalisant ainsi le raidissement des quatre coins (S) du sac résultant du processus d'emballage du film (F), le système étant constitué de quatre dispositifs de soudage à chaud (21, 22, 23, 24) dont les mouvements opératoires sont obtenus par un seul mouvement oscillant d'un arbre unique (A) ayant deux longues zones dentées (D) s'engageant chacune dans deux montants rectilignes (31, 32, 33, 34), les deux montants rectilignes transformant les oscillations angulaires de l'arbre (A) en translations rectilignes simultanées et opposées desdits quatre dispositifs de soudage à chaud (21, 22, 23,24).

2. Système selon la revendication 1, dans lequel lesdits quatre dispositifs de soudage à chaud (21, 22, 23, 24) comprennent des dispositifs longitudinaux de soudage à chaud (21, 22, 23, 24).

3. Système selon la revendication 1, dans lequel quatre ressorts (41, 42, 43, 44) sont insérés dans les quatre montants (31, 32, 33, 34) afin de permettre à tous les quatre dispositifs de soudage à chaud d'entrer en contact avec les contrepièces latérales (L) pour aplanir des différences géométriques légères mais inévitables.

4. Système selon la revendication 3, dans lequel il est construit pour permettre une possibilité de régulation automatique également d'une élasticité des quatre ressorts (41, 42, 43, 44) et pour obtenir une faculté de calibrer automatiquement une pression de soudage des quatre dispositifs de soudage à chaud (21, 22, 23, 24) avec la régulation de la longueur des oscillations angulaires de l'arbre unique (A).
